# EUROPÄISCHE PATENTSCHRIFT

(11) **EP 3 449 553 B1**
(45) Veröffentlichungstag und Bekanntmachung des Hinweises auf die Patenterteilung: **22.01.2020**
(21) Anmeldenummer: 17717690.6
(22) Anmeldetag: 12.04.2017
(51) Int. Cl.: H02K 15/095, H01F 41/09, H02K 15/04

(54) **WICKELMASCHINE**
COILING MACHINE
BOBINEUSE

(30) Priorität: 27.04.2016 EP 16167285
(43) Veröffentlichungstag der Anmeldung: 06.03.2019
(73) Patentinhaber: SMZ Wickel- und Montagetechnik AG, 5436 Würenlos (CH)
(72) Erfinder: RISSI, Daniel, 7212 Seewies (CH); ULRICH, Peter, 8964 Rudolfstetten (CH)
(74) Vertreter: Piticco, Lorena
(86) Internationale Anmeldenummer: PCT/EP2017/058847
(87) Internationale Veröffentlichungsnummer: WO 2017/186501

(56) Entgegenhaltungen:
- DE-A1- 2 511 515
- DE-A1- 19 510 829

## Beschreibung

### TECHNISCHES GEBIET

Die vorliegende Erfindung betrifft das Gebiet der Wickelmaschinen, insbesondere Drahtwickelmaschinen für das Wickeln von Einzelspulen oder Spulenanordnungen für beispielsweise einen Laborbetrieb oder eine Produktentwicklung, oder für die Produktion einer Vorserie oder einer Kleinserie.

### STAND DER TECHNIK

Aus dem Stand der Technik sind Wickelmaschinen für unterschiedliche Wickeltechniken bekannt. Im Allgemeinen verfügen alle Vorrichtungen, welche ein Wickelverfahren ausführen können, über eine Spulenkörperaufnahme, in welcher ein zu bewickelnder Spulenkörper in einem Aufnahmeraum aufgenommen wird, und über eine Wickelgutzuführung, mit welcher Wickelgut in den Aufnahmeraum zuführbar ist. Bekannte Wickeltechniken sind beispielsweise die Spulenwickeltechnik, die Nadelwickeltechnik, wobei die konventionelle Nadelwickeltechnik und die Linearwickeltechnik beide unter die Nadelwickeltechnik fallen, und die Flyerwickeltechnik.

Diese Wickeltechniken, wie sie hierin zu verstehen sind, werden anhand von Figuren zusammen mit den bevorzugten Ausführungsformen näher beschrieben.

Die DE 25 11 515 A1 offenbart eine Vorrichtung zum Wickeln von Spulen für elektrische Maschinen, die derart verstellbar ist, dass ohne grossen Aufwand verschiedene Wicklungsgrössen hergestellt werden können.

Die aus dem Stand der Technik bekannten Maschinen sind jede speziell für ein spezifisches Wickelverfahren ausgelegt und dementsprechend für dieses beispielsweise hinsichtlich der Produktionszeit oder der Kosten optimiert. Die Verwendung einer Maschine von einem Verfahren für den Einsatz in einem anderen Verfahren ist daher nicht vorgesehen oder ist nicht möglich.

### DARSTELLUNG DER ERFINDUNG

Es ist daher eine Aufgabe der vorliegenden Erfindung eine Wickelmaschine anzugeben, welche für unterschiedliche Wickelverfahren eingesetzt werden kann.

Diese Aufgabe wird durch eine erfindungsgemässe Wickelmaschine mit den Merkmalen des Anspruchs 1 gelöst.

Eine erfindungsgemässe Wickelmaschine, insbesondere eine Drahtwickelmaschine, für das Wickeln von mindestens einer Spule, weist einen Maschinenständer mit mindestens einer Spulenkörperaufnahme auf, wobei die mindestens eine Spulenkörperaufnahme einen Aufnahmeraum für mindestens einen zu bewickelnden Spulenkörper bereitstellt. Weiter weist die Wickelmaschine mindestens eine Wickelgutzuführung auf, wobei die mindestens eine Wickelgutzuführung ausgebildet ist, um Wickelgut in den Aufnahmeraum zuzuführen. Die mindestens eine Spulenkörperaufnahme umfasst einen Satz von mindestens einer ersten Aufnahmeeinheit und mindestens einer zweiten Aufnahmeeinheit, wobei die Wickelmaschine in einer ersten Einstellung, unter der Verwendung der ersten Aufnahmeeinheit, eine Bewicklung des mindestens einen zu bewickelnden Spulenkörpers gemäss einer ersten Wickeltechnik erlaubt und wobei die Wickelmaschine in einer zweiten Einstellung, unter der Verwendung der zweiten Aufnahmeeinheit, eine Bewicklung des mindestens einen zu bewickelnden Spulenkörpers gemäss einer zur ersten Wickeltechnik unterschiedlichen zweiten Wickeltechnik erlaubt. Die erste und zweite Wickeltechnik sind aus der Gruppe von Wickeltechniken bestehend aus der Spulenwickeltechnik, der konventionellen Nadelwickeltechnik, der Linearwickeltechnik und der Flyerwickeltechnik ausgewählt.

Die mindestens eine Spulenkörperaufnahme kann beispielsweise zwei, drei, vier, fünf, sechs, sieben, acht, neun, zehn, oder mehr solcher Spulenkörperaufnahmen umfassen, welche nebeneinander angeordnet sind.

Da jede Spulenkörperaufnahme Sätze von Aufnahmeeinheiten umfasst, sind diese Sätze beliebig austauschbar. Da jeder Satz für die Ausführung eines bestimmten Wickelverfahrens geeignet ist, ist je nach verwendetem Satz ein anderes Wickelverfahren ausführbar. Vorzugsweise werden auf allen Spulenkörperaufnahmen die gleichen Sätze von Aufnahmeeinheiten verwendet, um eine parallele Produktion mit identischen Wickelverfahren zu ermöglichen. Alternativ können auf unterschiedlichen Spulenkörperaufnahmen unterschiedliche Sätze von Aufnahmeeinheiten eingesetzt werden. Dies ermöglicht die parallele Produktion mit unterschiedlichen Wickelverfahren.

Die Austauschbarkeit der unterschiedlichen Sätze von Aufnahmeeinheiten hat den Vorteil, dass die Wickelmaschine einfach von einem auf das andere Wickelverfahren umrüstbar ist. Dies ist vorteilhaft für einen Laborbetrieb oder in einer Produktentwicklung wo beispielsweise Einzelspulen, Vorserien oder Kleinserien hergestellt werden. Der Fokus einer solchen Wickelmaschine liegt auf der Vielseitigkeit und nicht auf der Herstellung von grossen Stückzahlen.

Vorzugsweise weist die erste Aufnahmeeinheit einen ersten Aufnahmeträger und eine am ersten Aufnahmeträger angeordnete erste Aufnahme für die Aufnahme von einem ersten Spulenkörper des mindestens einen zu bewickelnden Spulenkörpers auf, womit der erste Spulenkörper gemäss der ersten Wickeltechnik bewickelbar ist.

Beispielsweise handelt es sich beim ersten Aufnahmeträger um eine Platte, auf welcher direkt oder mittels darauf angeordneten ersten Aufnahmen die zu bewickelnden Spulenkörper aufnehmbar sind. Beispielsweise kann die erste Aufnahme einen Drehmechanismus umfassen, welcher die automatische Drehung des darauf angeordneten Spulenkörpers erlaubt. Es können beispielsweise eine, zwei, drei, vier oder mehr solcher ersten Aufnahmen nebeneinander auf dem ersten Aufnahmeträger angeordnet sein.

Bevorzugt weist die zweite Aufnahmeeinheit einen zweiten Aufnahmeträger und eine am zweiten Aufnahmeträger angeordnete zweite Aufnahme für die Aufnahme von einem zweiten Spulenkörper des mindestens einen zu bewickelnden Spulenkörpers auf, womit der zweite Spulenkörper gemäss der zweiten Wickeltechnik bewickelbar ist.

Beispielsweise handelt es sich beim zweiten Aufnahmeträger um eine Platte, auf welcher direkt oder mittels darauf angeordneten zweiten Aufnahmen die zu bewickelnden Spulenkörper aufnehmbar sind. Beispielsweise kann die zweite Aufnahme die gleichzeitige Aufnahme von mehreren zu bewickelnden Spulenkörpern erlauben. Es können eine, zwei, drei, vier oder mehr solcher zweiten Aufnahmen nebeneinander auf dem zweiten Aufnahmeträger angeordnet sein.

Beispielsweise erlaubt die erste Aufnahmeeinheit das Ausführen der Spulenwickeltechnik und die zweite Aufnahmeeinheit das Ausführen der konventionellen Nadelwickeltechnik, der Linearwickeltechnik oder der Flyerwickeltechnik.

In einer vorzugsweisen Ausführungsform weist die mindestens eine Wickelgutzuführung einen Satz von mindestens einer ersten Zuführeinheit und einer zweiten Zuführeinheit auf, wobei die Wickelmaschine derart ausgebildet ist, dass in der ersten Einstellung der Wickelmaschine, die erste Zuführeinheit die Bewicklung des mindestens einen Spulenkörpers gemäss der ersten Wickeltechnik erlaubt und in der zweiten Einstellung der Wickelmaschine, die zweite Zuführeinheit die Bewicklung des mindestens einen Spulenkörpers gemäss der zweiten Wickeltechnik erlaubt.

Die mindestens eine Wickelgutzuführung kann beispielsweise zwei, drei, vier, fünf, sechs, sieben, acht, neun, zehn, oder mehr solcher Wickelgutzuführungen umfassen, welche nebeneinander angeordnet sind.

Da jede Wickelgutzuführung Sätze von Zuführeinheiten umfasst, sind diese Sätze beliebig austauschbar. Da jeder Satz für die Ausführung eines bestimmten Wickelverfahrens geeignet ist, ist je nach verwendetem Satz ein anderes Wickelverfahren ausführbar. Vorzugsweise werden auf allen Wickelgutzuführungen die gleichen Sätze von Zuführeinheiten verwendet, um eine parallele Produktion mit identischen Wickelverfahren zu ermöglichen. Alternativ können auf unterschiedlichen Wickelgutzuführungen unterschiedliche Sätze von Zuführeinheiten eingesetzt werden. Dies ermöglicht die parallele Produktion mit unterschiedlichen Wickelverfahren.

Die Austauschbarkeit der unterschiedlichen Sätze von Zuführeinheiten erlaubt ein einfaches uns rasches Umrüsten der Wickelmaschine, was die Ausführung von unterschiedlichen Wickelverfahren vereinfacht.

Vorzugsweise weist die erste Zuführeinheit einen ersten Zuführungsträger und eine am ersten Zuführungsträger angeordnete erste Zuführung für die Zuführung von Wickelgut auf, womit der erste Spulenkörper gemäss der ersten Wickeltechnik bewickelbar ist. Die zweite Zuführeinheit weist vorzugsweise einen zweiten Zuführträger und eine am zweiten Zuführträger angeordnete zweite Zuführung für die Zuführung von Wickelgut auf, womit der zweite Spulenkörper gemäss der zweiten Wickeltechnik bewickelbar ist.

Beispielsweise erlaubt die erste Zuführeinheit das Ausführen der Spulenwickeltechnik oder der konventionellen Nadelwickeltechnik und die zweite Zuführeinheit erlaubt das Ausführen der Linearwickeltechnik oder der Flyerwickeltechnik.

Die mindestens eine Spulenkörperaufnahme ist vorzugsweise unlösbar und/oder unverschiebbar und/oder unverschwenkbar und/oder unverdrehbar am Maschinenständer angeordnet oder die mindestens eine Spulenkörperaufnahme ist vorzugsweise lösbar und/oder verschiebbar und/oder verschwenkbar und/oder verdrehbar am Maschinenständer angeordnet.

Bevorzugt weist der Maschinenständer einen Tischbereich auf, wobei der Tischbereich zur Anordnung der mindestens einen Spulenkörperaufnahme ausgebildet ist. Der Maschinenständer weist vorzugsweise einen Portalbereich auf, wobei der Portalbereich zur Anordnung der mindestens einen Wickelgutzuführung ausgebildet ist.

In einer vorzugsweisen Ausführungsform weist der Portalbereich ein Portal auf, wobei das Portal unlösbar und/oder unverschiebbar und/oder unverschwenkbar und/oder unverdrehbar bezüglich des Maschinenständers an diesem angeordnet ist und wobei am Portal mindestens ein in einer ersten Richtung bezüglich des Maschinenständers linear verschiebbarer Schlitten angeordnet ist.

Das Portal ermöglicht einen grossen Verschiebbereich in der ersten Richtung, ohne dabei den Wickelraum zu beeinträchtigen.

Vorzugsweise ist die mindestens eine Spulenkörperaufnahme verschiebbar bezüglich einer zweiten Richtung bezüglich des Maschinenständers an diesem angeordnet, wobei die zweite Richtung winklig, vorzugsweise rechtwinklig, bezüglich der ersten Richtung ausgebildet ist.

Durch die Verschiebbarkeit der Spulenkörperaufnahme kann das Portal nicht verschiebbar ausgebildet werden, was eine einfachere Bauweise und eine einfachere Zuführung des Wickelgutes erlaubt.

Bevorzugt ist die mindestens eine Wickelgutzuführung unlösbar und/oder unverschiebbar und/oder unvreschwenkbar und/oder unverdrehbar am Maschinenständer angeordnet oder wobei die mindestens eine Wickelgutzuführung ist lösbar und/oder verschiebbar und/oder verschwenkbar und/oder verdrehbar am Maschinenständer angeordnet.

In einer vorzugsweisen Ausführungsform ist die mindestens eine Wickelgutzuführung am mindestens einen Schlitten angeordnet.

Vorzugsweise sind/ist die erste Aufnahme und/oder die zweite Aufnahme derart ausgebildet, dass sie eine Drehung des mindestens einen zu bewickelnden Spulenkörpers um eine Achse erlaubt, welche in einer dritten Richtung bezüglich des Maschinenständers ausgerichtet ist, wobei die dritte Richtung winklig, vorzugsweise rechtwinklig, bezüglich der ersten Richtung und der zweiten Richtung ausgebildet ist.

In einer bevorzugten Ausführungsform ist die mindestens eine Spulenkörperaufnahme derart ausgebildet, dass gleichzeitig ein, zwei, drei, vier, fünf, sechs, sieben, acht, neun, zehn, elf, zwölf oder mehr zu bewickelnde Spulenkörper aufnehmbar sind.

Vorzugsweise ist die mindestens eine Wickelgutzuführung derart ausgebildet, dass gleichzeitig ein, zwei, drei, vier, fünf, sechs, sieben, acht, neun, zehn, elf, zwölf oder mehr zu bewickelnde Spulenkörper bewickelbar sind. Es ist vorteilhaft, wenn die Anzahl der Wickelgutzuführungen mit der Anzahl der Spulenkörperaufnahmen übereinstimmt.

Das gleichzeitige Aufnehmen von mehreren zu bewickelnden Spulenkörpern und die gleichzeitige Zuführung von Wickelgut zu mehreren zu bewickelnden Spulenkörper erhöht die Produktivität der Wickelmaschine und erlaubt das Testen von Bedingungen, wie sie beispielsweise in der Serienproduktion vorherrschen.

Bevorzugt ist die erste Zuführung in der ersten Richtung verschiebbar und bezüglich der dritten Richtung verschwenkbar oder verdrehbar und wobei die erste Aufnahme bezüglich der zweiten Richtung verschiebbar ist und bezüglich der dritten Richtung verschwenkbar oder verdrehbar ist. Beispielsweise erlaubt diese Ausführungsform die Ausführung der Spulenwickeltechnik oder der konventionellen Nadelwickeltechnik.

Vorzugsweise ist die zweite Zuführung in der ersten Richtung verschiebbar oder die zweite Zuführung ist in der ersten Richtung verschiebbar und bezüglich der dritten Richtung verschwenkbar oder verdrehbar und die zweite Aufnahme ist bezüglich der zweiten Richtung verschiebbar. Dies erlaubt beispielsweise die Ausführung der Linearwickeltechnik.

Wickelgut ist beispielsweise Draht, beispielsweise Kupfer- oder Aluminiumdraht mit runden oder eckigen Querschnitten, welcher unbeschichtet oder beschichtet auf einen Spulenkörper aufgebracht wird. Die Beschichtung ist beispielsweise aus Kunststoff. Es können gebräuchliche Drähte mit unterschiedlichen Durchmessern verwendet werden.

Die Spulenwickeltechnik, die konventionelle Nadelwickeltechnik, die Linearwickeltechnik und die Flyerwickeltechnik, wie sie hierin zu verstehen sind, werden anhand von Figuren beschrieben.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer erfindungsgemässen Wickelmaschine;
- Fig. 2: eine seitliche Schnittansicht der Wickelmaschine von Figur 1 ohne Abdeckung;
- Fig. 3: eine frontale Schnittansicht der Wickelmaschine von Figur 1 ohne Abdeckung;
- Fig. 4: eine perspektivische Darstellung der Spulenwickeltechnik;
- Fig. 5: eine perspektivische Darstellung der konventionellen Nadelwickeltechnik;
- Fig. 6: eine perspektivische Darstellung der Linearwickeltechnik;
- Fig. 7: eine perspektivische Darstellung der Flyerwickeltechnik;
- Fig. 8: eine perspektivische Teilansicht der Wickelmaschine von Figur 1 mit einer Konfiguration für die konventionelle Nadelwickeltechnik;
- Fig. 9: eine perspektivische Ansicht der Zuführeinheit und der Zusatzeinheit der Figur 8;
- Fig. 10: eine perspektivische Teilansicht der Wickelmaschine von Figur 1 mit einer Konfiguration für die Linearwickeltechnik für einen einzelnen zu bewickelnden Spulenkörper;
- Fig. 11: eine perspektivische Ansicht der Zuführeinheit der Figur 10;
- Fig. 12: eine perspektivische Ansicht der Zuführeinheit der Figur 11 mit einem alternativen Antrieb;
- Fig. 13: eine perspektivische Teilansicht der Wickelmaschine von Figur 1 mit einer Konfiguration für die Linearwickeltechnik für mehrere gleichzeitig zu bewickelnde Spulenkörper;
- Fig. 14: eine perspektivische Ansicht der Zuführeinheit der Figur 13; und
- Fig. 15: eine perspektivische Ansicht einer Zusatzeinheit, beispielsweise einer Drahtfang- und Schneideinheit.

### BESCHREIBUNG BEVORZUGTER AUSFÜHRUNGSFORMEN

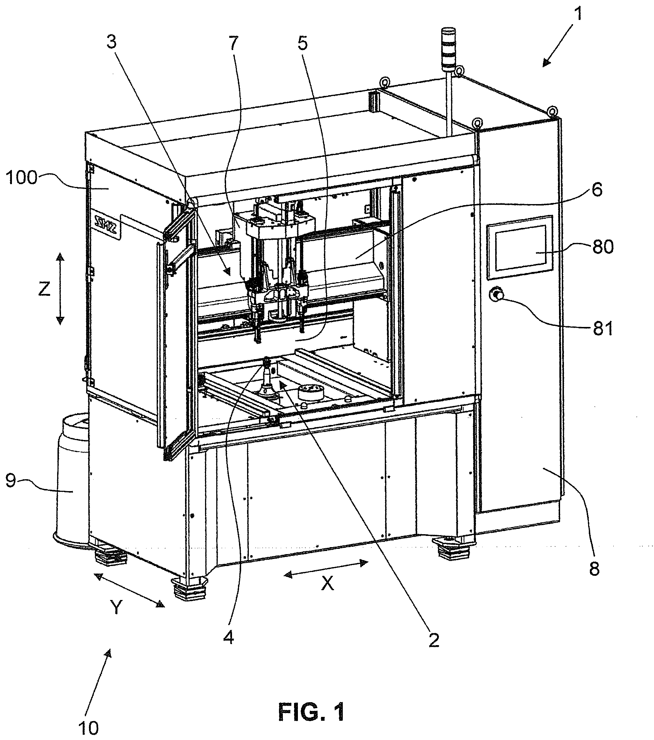

Die Figur 1 zeigt eine perspektivische Ansicht einer erfindungsgemässen Wickelmaschine 1. Die Wickelmaschine 1 weist im Wesentlichen einen Maschinenständer 10 mit einer Spulenkörperaufnahme 2 und einer Wickelgutzuführung 3 auf, wobei die Spulenkörperaufnahme 2 ausgebildet ist, um einen zu bewickelnden Spulenkörper 41, 42 einer Spule 4 in einem Aufnahmeraum 5 bereitzustellen und wobei die Wickelgutzuführung 3 ausgebildet ist, um Wickelgut 90 dem Aufnahmeraum 5 zuzuführen. Am Maschinenständer 10 ist ein Portal 6 angeordnet, an welchem ein Schlitten 7 in einer ersten Richtung X verfahrbar angeordnet ist. Weiter weist die Wickelmaschine 1 einen Schaltschrank 8 zur Bedienung und Steuerung der Wickelmaschine 1 auf. Frontseitig am Schaltschrank 8 ist eine Eingabeeinheit 80 in der Form eines Touchscreens vorgesehen. Weiter ist ein Not-Aus-Taster 81 im Bereich der Eingabeeinheit 80 vorgesehen. Der Schaltschrank 8 beherbergt eine Anlagensteuerung. Die Besonderheit der Anlagensteuerung besteht darin, dass sie zur Ausführung jedes des hierin erwähnten Wickelverfahrens geeignet ist. Beispielsweise kann nach dem Umrüsten der Maschine die Steuerung einfach (z.B. per Tastendruck oder Bereich auf dem Touchscreen) von der Steuerung eines Wickelverfahrens auf die Steuerungsfunktionen eines anderen Wickelverfahrens umgestellt werden. Alternativ können sie Sätze von Aufnahmeeinheiten 21, 22 und die Sätze von Zuführeinheiten 31, 32 mit Sensor-erkennbaren Merkmalen (z.B. RFID) versehen sein, welche von der Steuerung mit den entsprechenden Erkennungssensoren identifizierbar sind. Die Steuerung kann dann automatisch auf das Programm des entsprechenden Wickelverfahren umschalten.

Der Schaltschrank 8 ist seitlich des Maschinenständers 10 angeordnet. Die Bereiche der Spulenkörperaufnahme 2, der Wickelgutzuführung 3 und somit der Bereich des Aufnahmeraumes 5 sind durch eine Abdeckung 100 vor dem Eingreifen von aussen während dem Betrieb schützbar. Die Abdeckung 100 weist in einem vorderen, gegen einen Bediener gerichteten Bereich eine verschliessbare Öffnung auf. Dargestellt ist auf der in der Betrachtungsrichtung der Figur 1 linken Seite der Öffnung eine nach aussen geöffnete Schwenktüre und auf der rechten Seite der Öffnung eine zur Seite geschobene Schwenk-/Schiebetüre. Die Schiebe-/Schiebetüre weist einen äusseren Rahmen auf, der auf seiner rechten Seite um eine vertikale Drehachse bezüglich des Maschinenständers 10 schwenkbar an diesem angeordnet ist. In diesem schwenkbaren Rahmen ist eine nach rechts verschiebbare Schiebetüre geführt.

Die Wickelmaschine 1 weist im Wesentlichen drei Bewegungsrichtungen X, Y, Z auf. Eine erste Richtung X (X-Achse), in welcher der Schlitten 7 auf dem Portal 6 verschiebbar ist, eine zweite Richtung Y (Y-Achse), welche im Wesentlichen senkrecht auf der ersten Richtung X steht, und eine dritte Richtung Z (Z-Achse), welche im Wesentlichen senkrecht auf der ersten Richtung X und der zweiten Richtung Y steht. Im aktuellen Ausführungsbeispiel sind die erste Richtung X und die zweite Richtung Y horizontal und die dritte Richtung Z vertikal ausgerichtet.

Weiter weist die Wickelmaschine 1 einen Wickelgutspeicher 9 (Drahttonne) für Wickelgut (Draht) auf. Der Wickelgutspeicher 9 kann wie dargestellt neben der Wickelmaschine 1 angeordnet sein, sie kann jedoch auch in der Wickelmaschine 1 angeordnet sein. Es können auch mehrere Wickelgutspeicher 9 für gleiches oder unterschiedliches Wickelgut 90 vorgesehen sein. Das Wickelgut 90 kann unterschiedlich im Material oder in der Beschichtung, in den Abmessungen des Querschnitts (z.B. Grösse des Durchmessers) oder in der Querschnittsform (Kreis, Oval, Vieleck) sein.

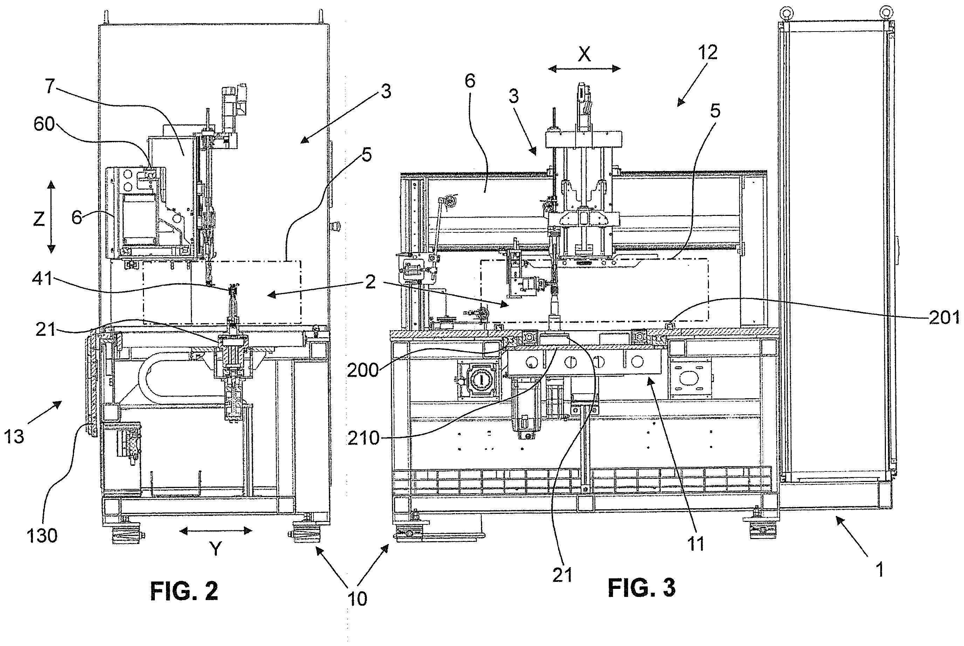

Die Figur 2 zeigt eine seitliche Schnittansicht der Wickelmaschine 1 von Figur 1 ohne Abdeckung 100 und die Figur 3 zeigt eine frontale Schnittansicht der Wickelmaschine von Figur 1 ohne Abdeckung 100. Der Maschinenständer 10 weist eine Rahmenkonstruktion auf. Eine erste Aufnahmeeinheit 21 ist in der zweiten Richtung Y im Maschinenständer 10 in einem Tischbereich 11 verschiebbar angeordnet. In der dargestellten Ausführungsform weist die erste Aufnahmeeinheit 21 einen ersten Aufnahmeträger 210 in der Form eines Tisches auf, welcher mittels erster Schienen 200 am Maschinenständer 10 in der zweiten Richtung Y verschiebbar angeordnet ist. Auf der ersten Aufnahmeeinheit 21 ist ein erster Spulenkörper 41 anordbar, welcher durch die erste Aufnahmeeinheit 21 im Aufnahmeraum 5 in der zweiten Richtung Y bewegbar ist und welcher um die Z-Achse drehbar ist. Die ersten Schienen 200 zur Führung der ersten Aufnahmeeinheit 21 sind im Innern des Maschinenständers 10 angebracht.

Das Portal 6 ist im vom Benutzer abgewandten, hinteren Bereich des Maschinenständers 10 an diesem angeordnet, d.h. in einem Portalbereich 12. In diesem Ausführungsbeispiel ist das Portal 6 unverschiebbar am Maschinenständer 10 angeordnet. Alternativ kann das Portal 6 verschiebbar am Maschinenständer 10 angeordnet sein. Beispielsweise kann das Portal 6 bezüglich der zweiten Richtung, d.h. in der Richtung der Y-Achse verschiebbar sein. Der Schlitten 7 ist mittels Portalschienen 60 in der ersten Richtung X verschiebbar am Portal 6 angeordnet. Die Verschiebung des Schlittens 7 erfolgt durch ein Antriebssystem, beispielsweise einem Spindelantrieb. Es können jedoch auch andere Antriebssysteme wie Riemen- oder Kettenantriebe oder andere herkömmliche lineare Antriebssysteme eingesetzt werden. Die Verschiebung der ersten Aufnahmeeinheit 21 in der Richtung der Y-Achse erfolgt mit einem Spindelantrieb. Andere herkömmliche Antriebssysteme sind jedoch ebenfalls verwendbar. Die Drehung der ersten Aufnahmeeinheit 21 um die Z-Achse erfolgt mittels Elektroantrieb. Andere herkömmliche Antriebe können ebenfalls verwendet werden.

Im hinteren Bereich des Maschinenständers 10 befindet sich beabstandet zum Aufnahmeraum 5 ein Parkbereich 13 mit einem Schwenktisch 130. Der Schwenktisch 130 ist bezüglich der X-Achse schwenkbar an der hinteren oberen Kante der Rahmenkonstruktion des Maschinenständers 10 angeordnet. Um das Schwenken des Tisches 130 zu unterstützen, können Unterstützungselemente in der Form von Federn oder Gegengewichten vorgesehen sein. Alternativ kann ein Schwenkantrieb vorgesehen sein. Soll die erste Aufnahmeeinheit 21 zum Einsatz kommen, so wird die zweite Aufnahmeeinheit 22 aus dem Bereich des Aufnahmeraums 5 entfernt. Hierfür kann der zweite Aufnahmeträger 220 von seinem Antrieb und seinen Schienen getrennt werden und kann neben der Maschine deponiert werden. Eine praktischere Variante stellt der obenerwähnte Schwenktisch 130 dar. Dieser erlaubt, dass der zweite Aufnahmeträger 220 lediglich von seinem Antrieb getrennt werden muss, denn nach der Trennung kann der zweite Aufnahmeträger 220 auf den hochgeklappten Schwenktisch 130 geschoben werden. Falls der hochgeklappte Schwenktisch 130 mit dem darauf angeordneten zweiten Aufnahmeträger 220 nicht den Betrieb der Anlage stört, so kann er in dieser Position belassen werden. Alternativ kann der Schwenktisch 130 zusammen mit dem zweiten Aufnahmeträger 220 nach unten geklappt werden.

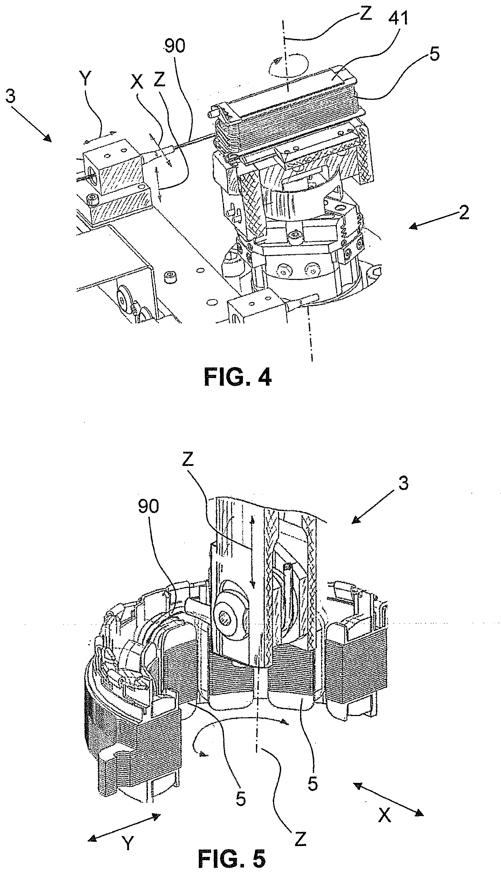

Die Figur 4 zeigt eine perspektivische Darstellung der Spulenwickeltechnik. Bei der Spulenwickeltechnik ist die Spulenkörperaufnahme 2 drehbar bezüglich der Z-Achse gelagert und die Spulenmittelachse des zu bewickelnden Spulenkörpers 41 ist im Wesentlichen mit der Drehachse der Spulenkörperaufnahme 2 ausgerichtet, vorzugsweise kollinear. Die Wickelgutzuführung 3 ist mindestens in einer Richtung parallel zur Drehachse der Aufnahme Z bewegbar. Zusätzlich kann die Wickelgutzuführung 3 in einer auf die Z-Achse senkrechten horizontalen Richtung X bewegbar sein und/oder es kann eine Relativbewegung zwischen der Spulenkörperaufnahme 2 und der Wickelgutzuführung 3 in der Richtung der Y-Achse vorgesehen sein, wobei entweder die Spulenkörperaufnahme 2 und/oder die Wickelgutzuführung 3 verschiebbar ausgebildet ist. Beim Aufbringen des Wickelguts 90 auf den zu wickelnden Spulenkörper 41 wird die Wickelgutzuführung 3 derart verfahren, dass das Wickelgut 90 schichtweise im Wesentlichen tangential zum bereits aufgebrachten Wickelgut 90 aufbringbar ist. Selbstverständlich kann die Wickelgutzuführung anders ausgerichtet sein, wodurch lediglich die entsprechenden Achsen vertauscht werden.

Bei der Nadelwickeltechnik gibt es zwei verschiedene Techniken: Die konventionelle Nadelwickeltechnik und die Linearwickeltechnik.

Die Figur 5 zeigt eine perspektivische Darstellung der konventionellen Nadelwickeltechnik. Bei der konventionellen Nadelwickeltechnik sind die zu bewickelnden Spulenkörper eines Rotors oder Stators in einer drehbaren Spulenkörperaufnahme (hier nicht dargestellt) gelagert, wobei die Mittelachse des Rotors oder Stators mit der Drehachse der Aufnahme ausgerichtet ist, vorzugsweise kollinear. Die Wickelgutzuführung 3 ist mindestens in einer Richtung parallel zur Drehachse der Aufnahme Z und in einer darauf senkrechten Richtung X bewegbar. Die Wickelgutzuführung 3 weist eine erste Zuführung mit einer Nadel auf, welche zwischen zwei benachbarte zu bewickelnde Spulenkörper einfahrbar ist. Beim Aufbringen des Wickelguts auf einen der zu wickelnden Spulenkörper sind die Bewegungen der Spulenkörperaufnahme (Rotation um die Z-Achse: hin und her; Translation entlang der Y-Achse: vor und zurück) und der Wickelgutzuführung (Translation entlang der Z-Achse: auf und ab;) derart aufeinander abgestimmt, dass das Wickelgut 90 mit der Nadel schichtweise auf das bereits aufgebrachte Wickelgut aufbringbar ist. Alternativ kann die Nadel schwenkbar ausgebildet sein, so dass sie von einer im Wesentlichen horizontalen Ausrichtung in eine im Wesentlichen vertikale Ausrichtung bringbar ist, und umgekehrt.

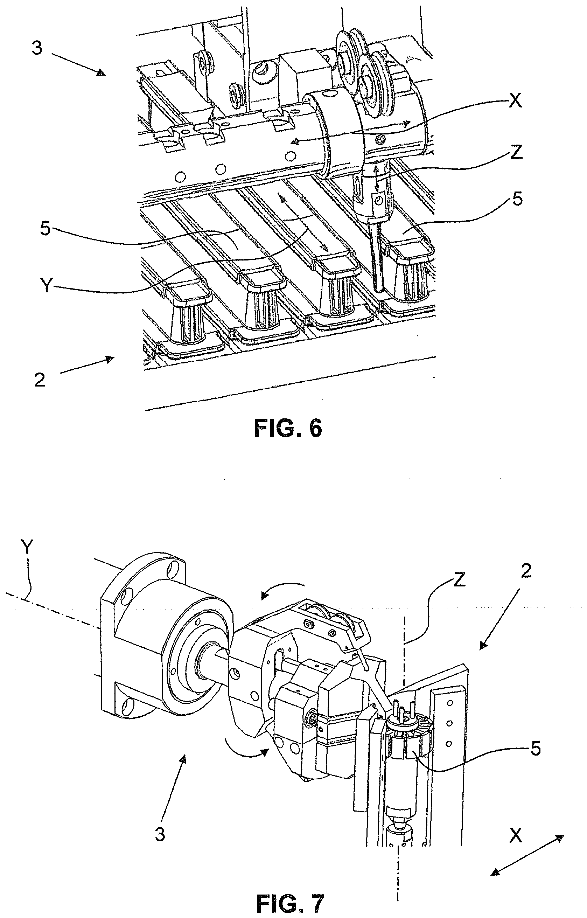

Figur 6 eine perspektivische Darstellung der Linearwickeltechnik. Bei der Linearwickeltechnik wird der Rotor/Stator aufgetrennt und die zu bewickelnden Spulenkörper 42 werden abgerollt und nebeneinander auf einer Ebene platziert. Dies bietet den Vorteil, dass sich der Abstand zwischen zwei benachbarten zu bewickelnden Spulenkörpern 42 im Vergleich zur aufgerollten Gebrauchsform vergrössert, was den Einsatz einer Nadel mit einem grösseren Querschnitt erlaubt, wodurch die Verwendung von Wickelgut mit grösserem Querschnitt ermöglicht wird.

Bei der Linearwickeltechnik sind die zu bewickelnden Spulenkörper 41 einzeln oder gemeinsam auf einer verschiebbaren Spulenkörperaufnahme 2 gelagert, wobei die Achse der Längsausdehnung des oder der zu bewickelnden Spulenkörper mit der Bewegungsachse (Y-Achse) der Spulenkörperaufnahme 2 ausgerichtet ist, vorzugsweise kollinear. Die Wickelgutzuführung 3 ist mindestens in einer Richtung senkrecht zur Bewegungsachse der Aufnahme (X-Achse) und in einer darauf senkrechten Richtung (Z-Achse) bewegbar. Die Wickelgutzuführung 3 weist eine Nadel auf, welche zwischen zwei benachbarte zu bewickelnde Spulenkörper einfahrbar ist. Beim Aufbringen des Wickelguts auf einen der zu wickelnden Spulenkörper sind die Bewegungen der Spulenkörperaufnahme 2 (Translation entlang der Y-Achse: vor und zurück) und der Wickelgutzuführung (Translation entlang der X-Achse: hin und her; Translation entlang der Z-Achse: auf und ab) derart aufeinander abgestimmt, dass das Wickelgut mit der Nadel schichtweise auf das bereits aufgebrachte Wickelgut aufbringbar ist.

Die Figur 7 zeigt eine perspektivische Darstellung der Flyerwickeltechnik. Bei der Flyerwickeltechnik ist der zu bewickelnde Spulenkörper 5 während dem Wickeln starr gelagert, wobei die Spulenmittelachse des zu bewickelnden Spulenkörpers, in der dargestellten Ausführungsform ein einzelner Zahn eines Rotors, mit der Bewegungsrichtung Y der Wickelgutzuführung 3 ausgerichtet ist, vorzugsweise kollinear. Die Wickelgutzuführung ist mindestens in der Richtung der Spulenmittelachse Y bewegbar und kann eine Rotation um diese Achse Y ausführen. Während dem Wickeln rotiert die Wickelgutzuführung 3 um die Spulenmittelachse. Zusätzlich kann sich die Wickelgutzuführung 3 gleichzeitigen entlang der Spulenmittelachse Y bewegen. Es können mehrere zu bewickelnde Spulenkörper, wie beim dargestellten Rotor, auf einer drehbaren Spulenkörperaufnahme angeordnet sein. Nach dem Wickeln einer Spule, wird die Spulenkörperaufnahme um eine Teilung verdreht, sodass der nächste Spulenkörper bewickelbar ist.

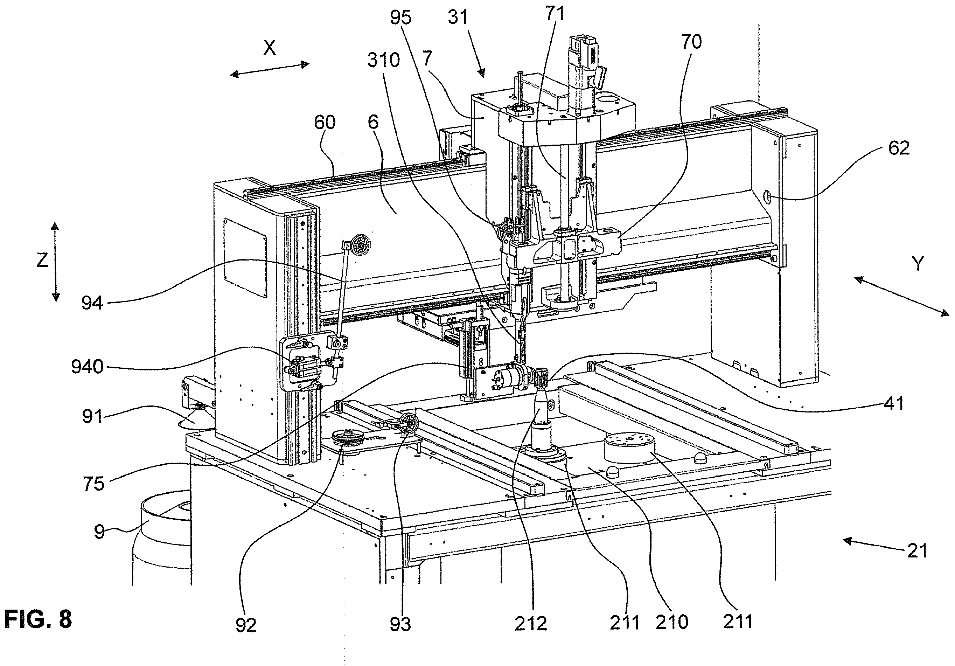

Die Figur 8 zeigt eine perspektivische Teilansicht der Wickelmaschine von Figur 1 mit einer Konfiguration für die konventionelle Nadelwickeltechnik. Im Tischbereich 11 ist die erste Aufnahmeeinheit 21 installiert. Die zweite Aufnahmeeinheit 22 befindet sich in dieser Konfiguration im Parkbereich 13, um den Aufnahmeraum 5 nicht zu beeinträchtigen, d.h. die Bewicklung nicht zu behindern. Die erste Aufnahmeeinheit 21 weist einen in der zweiten Richtung (Y-Achse) verschiebbaren ersten Aufnahmeträger 210 in der Form eines auf ersten Schienen 200 (nicht dargestellt) verschiebbaren Tisches auf, auf welchem in dieser Ausführungsform zwei erste Aufnahmen 211 nebeneinander auf dem Tisch 210 angeordnet sind, wobei eine der beiden Aufnahmen 211, in diesem Fall die linke, einen Adapter 212 zur Aufnahme eines ersten zu bewickelnden Spulenkörpers 41 aufweist. Die beiden ersten Aufnahmen 211 sind um die Z-Achse drehbar ausgebildet.

Seitlich vom Zuführraum 5 sind auf dem Maschinenständer 10 im Tischbereich11 herkömmliche Elemente zur Wickelgutzuführung angeordnet. Das Wickelgut 90 wird aus dem Wickelgutspeicher 9 (auch Drahttonne genannt) über einen Umlenktrichter 91 zu einer Bremsrolle 92 und von dieser über eine Sensorrolle 93 und einen Kompensationsarm 94 mit Umlenkrolle zur ersten Zuführeinheit 31 geführt. Der Kompensationsarm 94 ist seitlich am Portal 6 angeordnet. Der Kompensationsarm 94 ist durch ein Federelement 940 vorgespannt wodurch eine Spannkraft auf das Wickelgut 90 ausgeübt wird. Beim Wickeln kann der Kompensationsarm 94 Unterschiede in der Geschwindigkeit der Zufuhr von Wickelgut ausgleichen, indem der Arm bei erhöhter Geschwindigkeit ausgelenkt wird, in diesem Fall nach unten und wobei der Arm nach oben schwenkt, wenn die Geschwindigkeit abnimmt. Dadurch kann sichergestellt werden, dass das Wickelgut möglichst gleichmässig aus dem Wickelgutspeicher 9 gefördert wird. Alternativ kann der Kompensationsarm auch auf dem Maschinenständer 10 angeordnet sein, so wie in diesem Ausführungsbeispiel die Bremsrolle 92 und die Sensorrolle 93. Die Bremsrolle 92, zusammen mit dem Kompensationsarm 94, stellt sicher, dass ein ausreichender Zug auf den zu wickelnden Draht (Wickelgut) 90 ausgeübt wird, d.h. dass der Wickeldraht 90 genügend gespannt ist. Die Sensorrolle 93 stellt fest, ob ein Draht durch die Rolle geführt wird. Ist dies nicht der Fall, so wird ein entsprechendes Signal an die Anlagensteuerung übermittelt. Der Wickelprozess wird unterbrochen und/oder es wird ein akustisches und/oder optisches Warnsignal erzeugt.

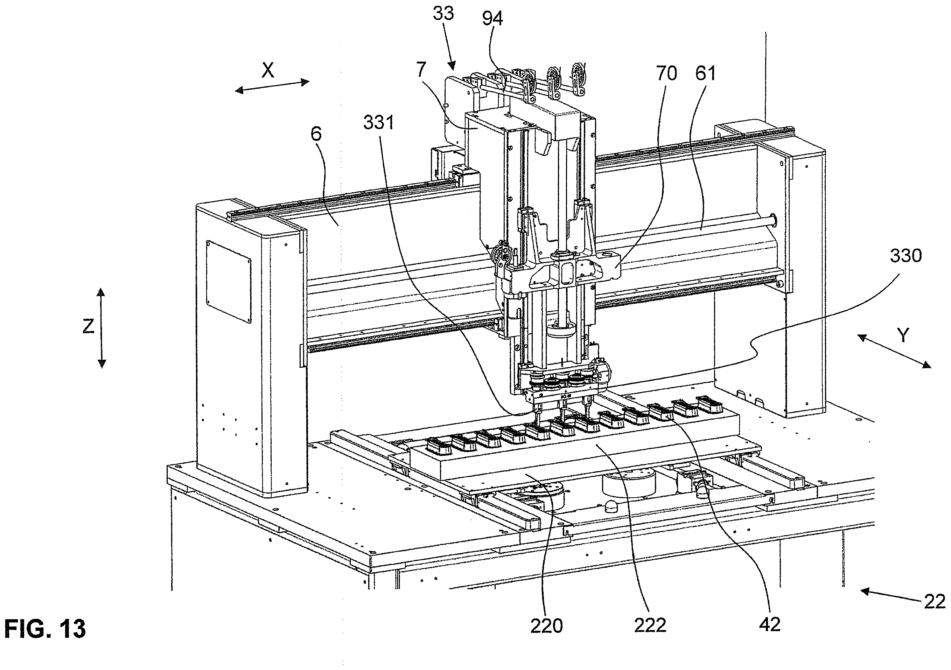

Die erste Zuführeinheit 31 ist im Portalbereich 12 angeordnet. Ein Schlitten 7 ist horizontal verschiebbar (X-Achse) mittels Portalschienen 60 und Antrieb am Portal 6 angeordnet. In der dargestellten Ausführungsform wird die Horizontalverschiebung des Schlittens 7 für den Wickelprozess nicht benötigt und ist daher nicht dargestellt. Wie in der Figur 13 dargestellt ist, kann jedoch ein Antrieb 61 für die Horizontale Achse X vorgesehen sein, beispielsweise in der Form eines Spindelantriebes. Am Portal 6 sind Öffnungen 62 für die Spindel vorgesehen. Alternativ kann auch ein Riemen- oder Kettenantrieb oder ein anderer bekannter Linearantrieb verwendet werden.

Ein Vertikalschlitten 70 ist vertikal (Z-Achse) verschiebbar mittels Schienen und Antriebssystem 71, 72 am Schlitten 7 angeordnet. Beim Antriebssystem 71, 72 für die vertikale Verschiebung handelt es sich in dieser Ausführungsform um einen Spindelantrieb; andere Antriebssysteme sind jedoch ebenfalls verwendbar. Auf der gegen den Tischbereich 11 gerichteten Seite des Vertikalschlittens 70 ist ein erster Zuführungsträger 310 mit einer ersten Zuführung 311 (einer sogenannten Nadel) angeordnet. Diese ersten Zuführungen 311 sind aus dem Stand der Technik bekannt und leiten ein Wickelgut 90 aus der Vertikalen in die Horizontale um und erlauben die Aufbringung vom Wickelgut auf den zu bewickelnden Spulenkörper. Im dargestellten Beispiel handelt es sich um einen Rotor eines Elektromotors mit aussenliegenden Spulen, welcher mit der konventionellen Nadelwickeltechnik zu bewickeln ist.

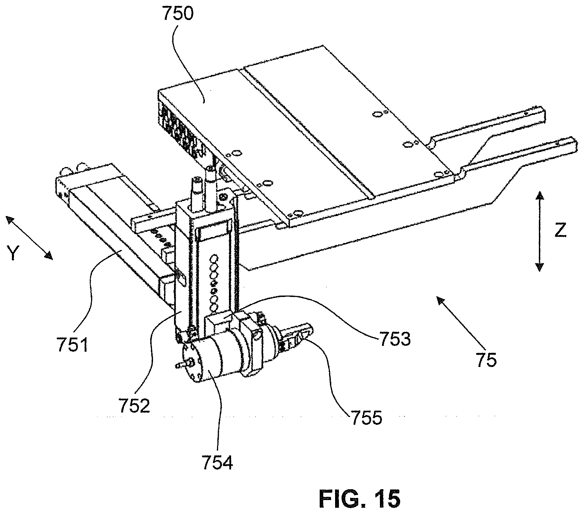

Ferner ist in der Figur 8 eine Zusatzeinheit 75 gezeigt, welche zum Halten, bzw. zum Fangen und Schneiden des Wickelguts 90 dient. Diese Zusatzeinheit 75 ist im Zusammenhang mit der Figur 15 detailliert beschrieben.

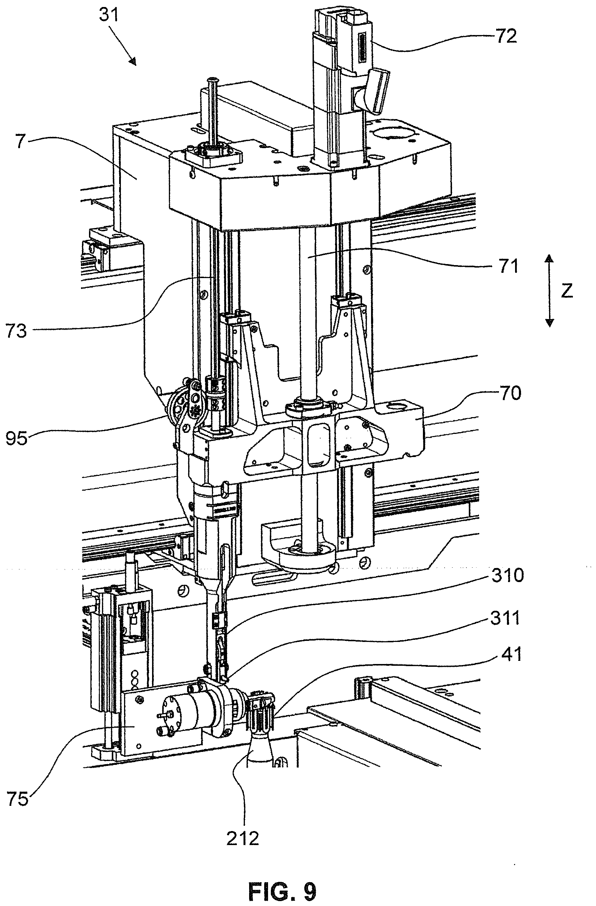

Die Figur 9 zeigt eine perspektivische Ansicht der Zuführeinheit 31 der Figur 8. Der generelle Aufbau wurde schon im Zusammen mit der Figur 8 beschrieben. Der Vertikalschlitten 70 ist verschiebbar durch eine Spindel 71, welche mit einem Elektromotor 72 angetrieben ist. Die Nadel 311 ist durch einen Mechanismus im ersten Zuführungsträger 310 von der Horizontalen in die Vertikale schwenkbar und umgekehrt. Eine Profilwelle 73 überträgt ein Antriebsmoment von einem nicht dargestellten Antrieb des Schlittens 7 auf den Mechanismus im ersten Zuführungsträger 310 und dieser weiter auf die erste Zuführung 311. Die Profilwelle 73 ermöglicht eine präzise Kraftübertragung in jeder beliebigen Position des Vertikalschlittens 70.

Eine weitere Umlenkrolle 95 ist auf dem Vertikalschlitten 70 der ersten Zuführeinheit 31 angeordnet, welche das Wickelgut von der Horizontalen in die Vertikale umlenkt und dem ersten Zuführungsträger 310 zuführt.

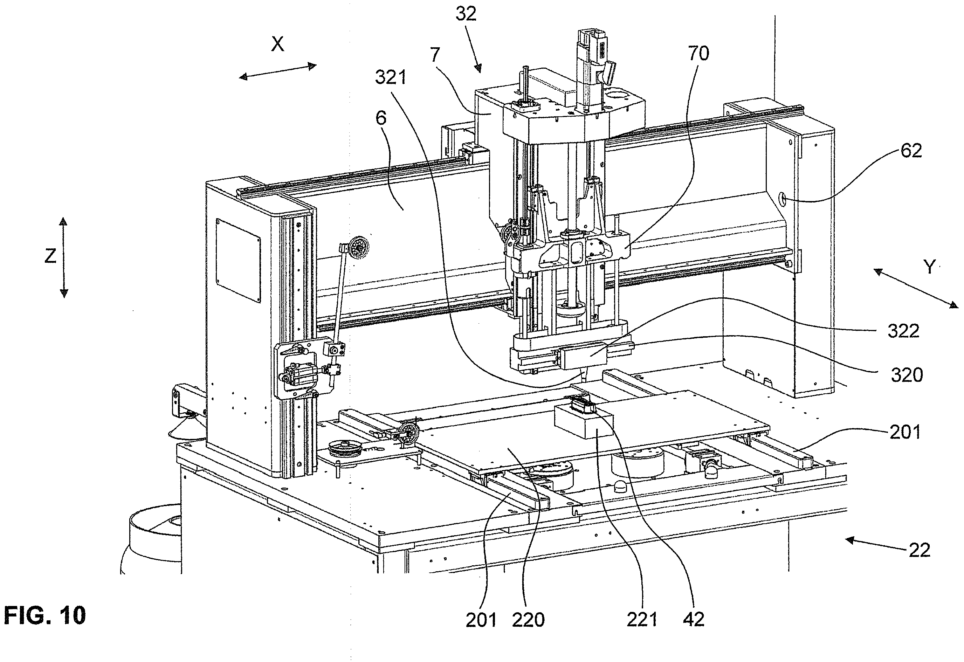

Die Figur 10 zeigt eine perspektivische Teilansicht der Wickelmaschine 1 von Figur 1 mit einer Konfiguration für die Linearwickeltechnik für einen einzelnen zu bewickelnden Spulenkörper 42. Beim zweiten zu bewickelnden Spulenkörper 42 handelt es sich im dargestellten Ausführungsbeispiel um einen einzelnen Zahn eines Elektromotors. Im Tischbereich 11 ist die zweite Aufnahmeeinheit 22 installiert. Die zweite Aufnahmeeinheit 22 weist einen in der zweiten Richtung (Y-Achse) verschiebbaren zweiten Aufnahmeträger 220 in der Form eines auf zweiten Schienen 201 verschiebbaren Tisches auf, wobei bei dieser Ausführungsform eine zweite Aufnahme 221 auf dem Tisch 220 angeordnet ist. Die zweiten Schienen 201 zur Führung der zweiten Aufnahmeeinheit 21 sind auf dem Maschinenständer 10 angebracht.

Im Portalbereich 12 ist die zweite Zuführeinheit 32 angeordnet. Am Vertikalschlitten 70 ist auf der gegen den Tischbereich 11 gerichteten Seite ein zweiter Zuführungsträger 320 mit einer zweiten Zuführung 321 mit einer Nadel angeordnet. Diese zweite Zuführung 321 ist aus dem Stand der Technik bekannt.

In der dargestellten Ausführungsform wird die Horizontalverschiebung des Schlittens 7 für den Wickelprozess nicht benötigt und ist daher nicht dargestellt. Wie in der Figur 13 dargestellt ist, kann jedoch ein Antrieb 61 für die Horizontale Achse X vorgesehen sein, beispielsweise in der Form eines Spindelantriebes. Der Horizontalantrieb des Schlittens 7 erlaubt, beispielsweise ein flexibles Positionieren der zweiten Aufnahme 221 und somit des zu bewickelnden Spulenkörpers 42. Am Portal 6 sind Öffnungen 62 für die Spindel vorgesehen. Alternativ kann auch ein Riemen- oder Kettenantrieb oder ein anderer bekannter Linearantrieb verwendet werden.

In dieser Ausführungsform ist der zweite Zuführungsträger 320 am Vertikalschlitten 70 angeordnet, wobei der zweite Zuführungsträger 320 einen Horizontalschlitten 322 (zweite X-Achse) aufweist. Der horizontale Antrieb ist mittels eines Riemenantriebs umgesetzt. Wenn ein Antrieb für die X-Achse des Schlittens 322 vorgesehen ist, so können die grossen langsamen Verschiebungen in der ersten Richtung X (erste X-Achse), beispielsweise beim Einrichten der Maschine oder beim Wechseln zu einem weiteren zu bewickelnden Spulenkörper, durch den Schlitten 7 ausgeführt werden und die kleinen schnellen Verschiebungen in der ersten Richtung X (zweite X-Achse) können durch den Horizontalschlitten 322 ausgeführt werden. Dies hat den Vorteil, dass die grosse Masse der gesamten zweiten Zuführeinheit 32 mit Schlitten 7, Vertikalschlitten 70 und Horizontalschlitten 322 durch den robusten horizontalen Antrieb 61 ausgeführt wird und dass die kleine Masse des Horizontalschlittens 322 mit der zweiten Zuführung 321 durch einen kleineren Antrieb ausgeführt werden kann. Dadurch, dass kleinere Massen bewegt werden müssen, ist eine kleinere, weniger robuste Konstruktion möglich, da die auf die Konstruktion wirkenden Beschleunigungskräfte kleiner sind, welche aus den Bewegungen resultierenden.

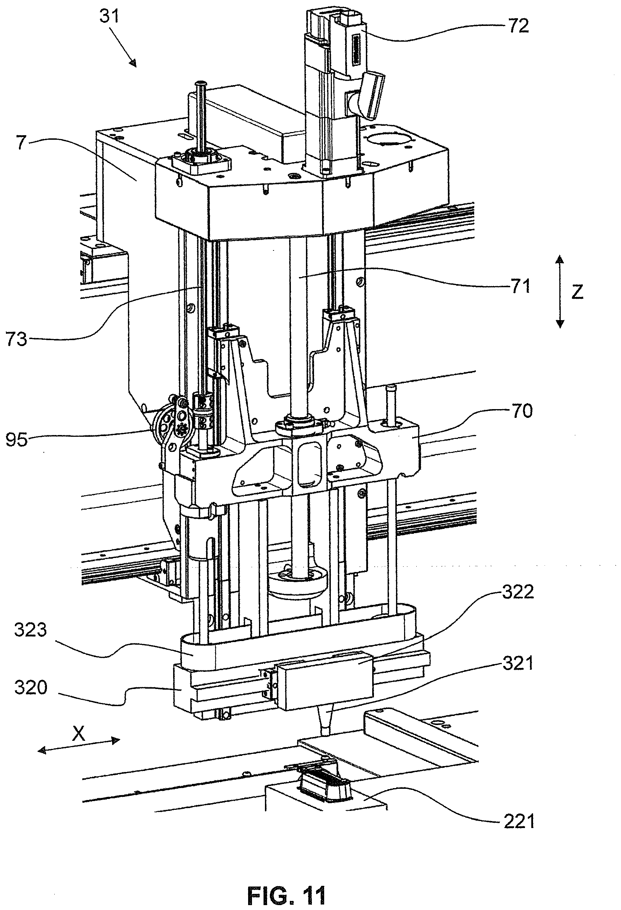

Die Figur 11 zeigt eine perspektivische Ansicht der Zuführeinheit der Figur 10. Am Vertikalschlitten 70 ist der zweite Zuführungsträger 320 mit dem schienengeführten Horizontalschlitten 322 angeordnet, an welchem eine Nadel 321 für die Zuführung des Wickelguts angeordnet ist. Die Verschiebung des Horizontalschlittens 232 (zweite X-Achse) erfolgt mit einem Riemenantrieb 323. Die Profilwelle 73 überträgt ein Antriebsmoment von einem nicht dargestellten Antrieb des Schlittens 7 auf den Riemenantrieb 323.

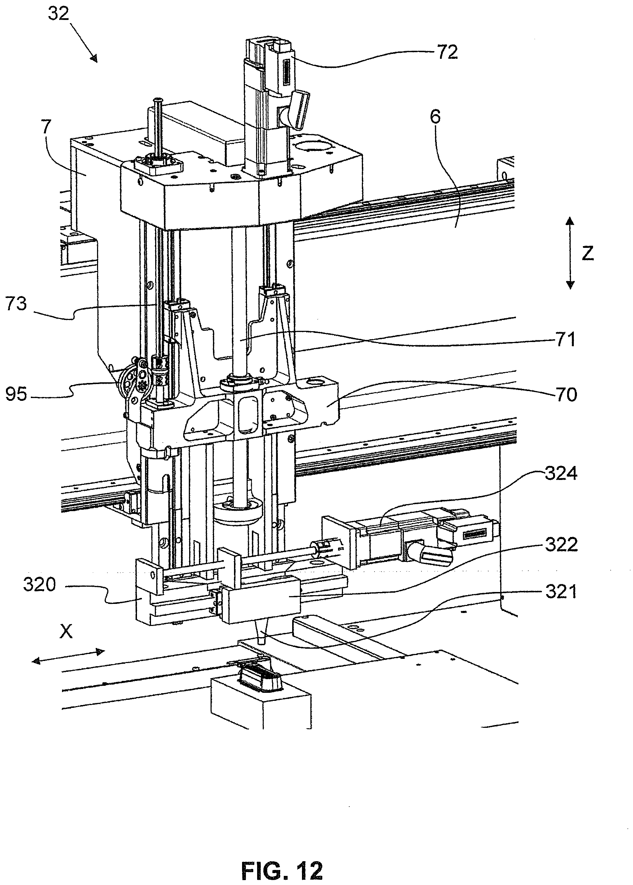

Die Figur 12 zeigt eine perspektivische Ansicht einer alternativen zweiten Zuführeinheit 32 für die Linearwickeltechnik für einen einzelnen zu bewickelnden Spulenkörper 42. Im Unterschied zur Ausführungsform der Figur 11 ist der Antrieb des Horizontalschlittens 322 (zweite X-Achse) mit einem Spindelantrieb 324
realisiert. Ansonsten sind der Aufbau und die Funktionsweise der Komponenten dieser Ausführungsform identisch zu der der Figur 11. Die direkte Anordnung des Antriebs in unmittelbarer Nähe des Horizontalschlittens 322 verringert die zu bewegende Masse und erlaubt daher grössere Beschleunigungen, was zu kürzeren Wickelzeiten führt.

Die Figur 13 zeigt eine perspektivische Teilansicht der Wickelmaschine 1 von Figur 1 mit einer Konfiguration für die Linearwickeltechnik für mehrere gleichzeitig zu bewickelnde Spulenkörper 42. Bei den zweiten zu bewickelnden Spulenkörpern 42 handelt es sich im dargestellten Ausführungsbeispiel um mehrere Zähne eines Elektromotors. Diese können einzeln auf einer alternativen zweiten Aufnahme 222 angeordnet und befestigt sein oder sie können untereinander verbunden sein, beispielsweise durch ein Band. Aus praktischen Gründen sind die Zähne identisch ausgestaltet. Sie können jedoch auch zueinander unterschiedlich ausgebildet sein. Im Tischbereich 11 ist die zweite Aufnahmeeinheit 22 installiert. Die zweite Aufnahmeeinheit 22 weist einen in der zweiten Richtung (Y-Achse) verschiebbaren zweiten Aufnahmeträger 220 in der Form eines auf Schienen verschiebbaren Tisches auf, auf welchem in dieser Ausführungsform die alternative zweite Aufnahmen 222 auf dem Tisch 220 angeordnet ist.

Im Portalbereich 12 ist wie in der Ausführungsform der Figuren 8 und 10 ein Portal 6 mit einem Schlitten 7 und einem Vertikalschlitten 70 angeordnet. In dieser Ausführungsform ist der Schlitten 7 (X-Achse) mittels Portalschienen 60 und Antrieb 61 horizontal verschiebbar, beispielsweise mit einem Spindelantrieb. Alternative lineare Antriebe sind ebenfalls möglich.

Eine am Vertikalschlitten 70 angeordnete alternative zweite Zuführeinheit 33 mit einem alternativen zweiten Zuführungsträger 330 mit einer alternativen zweiten Zuführung 331 erlaubt die gleichzeitige Bewicklung von drei identischen zu bewickelnden zweiten Spulenkörpern 42. In diesem Fall erfolgt die Zuführung des Wickelgutes 90 für die einzelnen Nadeln 331 über den Schlitten 7. Die Kompensationsarme 94 sind auf dem Schlitten 7 angeordnet. Alternativ könnte die Zuführung von Wickelgut, so wie bei dem Ausführungsbeispiel der Figur 8 von der Seite erfolgen, zumindest für die äussersten Nadeln der alternativen zweiten Zuführungen 331. Alternativ können mehr als drei Spulen 4 gleichzeitig miteinander gewickelt werden.

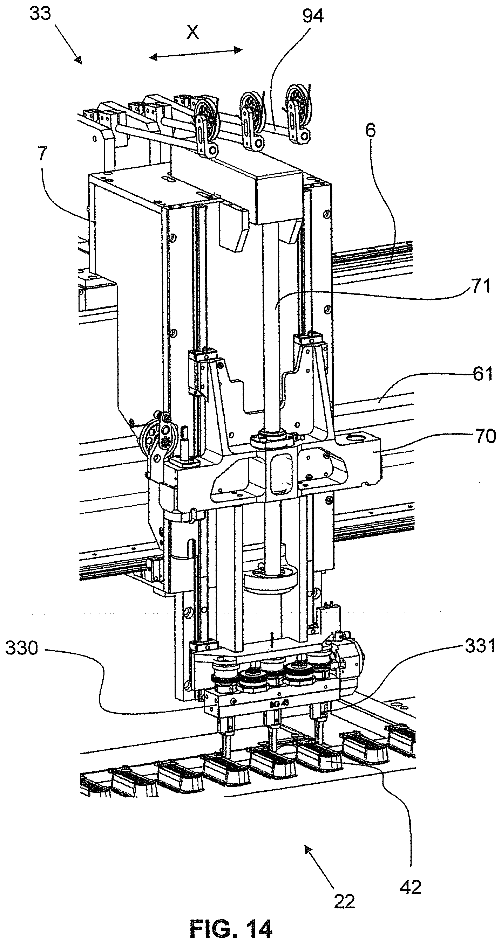

Die Figur 14 zeigt eine perspektivische Ansicht der alternativen zweiten Zuführeinheit 33 der Figur 13. Wie in den vorherigen Ausführungsbeispielen wird der Vertikalschlitten 70 mittels Spindel 71 und einem nicht dargestellten Antrieb bewegt. Da für den Antrieb auf dem Schlitten 70 kein Platz vorhanden ist, da dieser von den Kompensationsarmen 94 benötigt wird, ist der Antrieb für den Vertikalschlitten im Innern des Schlittens 7 angeordnet.

Die Figur 15 zeigt eine perspektivische Ansicht einer Zusatzeinheit 75. Im dargestellten Ausführungsbeispiel ist die Zusatzeinheit 75 eine Fang und Schneidvorrichtung für Wickelgut. Die Zusatzeinheit 75 weist eine Basis 750 auf, mit welcher die Zusatzeinheit 75 am Schlitten 7 befestigbar ist. Vorzugsweise wird die Zusatzeinheit 75 auf der Unterseite des Schlittens 7, d.h. auf seiner gegen den Wickelraum 5 gerichteten Seite, am Schlitten 7 befestigt.

Eine Wickelgut-Fang- und Schneideinheit ist über Verstelleinheiten 751, 752, 753 an der Basis 750 angeordnet. Eine horizontale Verstelleinheit 751 (Y-Achse), eine auf dieser angeordnete vertikale Verstelleinheit 752 und ein Kugelgelenk 753 erlauben eine flexible und vielseitige Positionierung der Fang- und Schneideinheit bezüglich des zu bewickelnden Spulenkörpers. Dargestellt ist eine Zusatzeinheit mit einer Fang- und Schneidvorrichtung. Selbstverständlich können zwei oder mehr solcher Einheiten an einer gemeinsamen Basis angeordnet werden. Alternativ können die Verstelleinheiten auch direkt am Schlitten 7 angeordnet werden. Jede Fang- und Schneideinheit verfügt über einen Aktuator 754, mit welchem ein Fang- und Schneidwerkzeug 755 betätigbar ist.

Andere herkömmliche Zusatzeinheiten können ebenfalls in ähnlicher Art und Weise am Portal 6 oder am Maschinenständer 10 angeordnet werden.

Beispielsweise sind Mess- oder Erkennungsvorrichtungen zur Erkennung bestimmter Positionen der zu bewickelnden Spulenkörper 41, 42 einsetzbar. Beispielsweise können optische (z.B. Laser) oder mechanische (z.B. Taster) zur Positionserkennung eingesetzt werden. Da die Spulenkörper üblicherweise aus gestapelten Blechen aufgebaut sind, ist es ausreichend, wenn die Genauigkeit dieser Mess- oder Erkennungsvorrichtungen im Bereich der Blechdicke liegt. Üblicherweise werden Bleche mit Dicken von 0,3 bis 0,5 Millimetern verwendet. Die Erreichung einer grösseren Genauigkeit ist möglich, verteuert aber im Allgemeinen die dafür benötigte Sensorik. Diese Positionserkennung erleichtert das Einrichten der Maschine und beschleunigt so die Umstellung von einem zu bewickelnden Spulenkörper auf den nächsten. Diese Erkennungsvorrichtungen können auf bei Spulenkörpern gleicher oder identischer Bauweise verwendet werden, um fertigungsbedingte Unterschiede automatisch zu erkennen und mittels der Maschinensteuerung zu kompensieren oder korrigieren.

**BEZUGSZEICHENLISTE**

| | | | |
|---|---|---|---|
| 1 | Wickelmaschine | 41 | erster Spulenkörper |
| 10 | Maschinenständer | 42 | zweiter Spulenkörper |
| 100 | Abdeckung | 5 | Aufnahmeraum |
| 11 | Tischbereich | 6 | Portal |
| 12 | Portalbereich | 60 | Portalschiene |
| 13 | Parkbereich | 61 | Antrieb |
| 130 | Schwenktisch | 62 | Öffnung |
| 2 | Spulenkörperaufnahme | 7 | Schlitten |
| 200 | erste Schiene | 70 | Vertikalschlitten |
| 201 | zweite Schiene | 71 | Spindel |
| 21 | erste Aufnahmeeinheit | 72 | Antrieb |
| 210 | erster Aufnahmeträger | 73 | Profilwelle |
| 211 | erste Aufnahme | 75 | Zusatzeinheit |
| 212 | Adapter | 750 | Basis |
| 22 | zweite Aufnahmeeinheit | 751 | horizontale Verstelleinheit |
| 220 | zweiter Aufnahmeträger | 752 | vertikale Verstelleinheit |
| 221 | zweite Aufnahme | 753 | Kugelgelenk |
| 222 | alternative zweit Aufnahme | 754 | Aktuator |
| 3 | Wickelgutzuführung | 755 | Fang- und Schneidwerkzeug |
| 31 | erste Zuführeinheit | 8 | Steuerschrank |
| 310 | erster Zuführungsträger | 80 | Eingabeeinheit |
| 311 | erste Zuführung | 81 | Taster |
| 32 | zweite Zuführeinheit | 9 | Wickelgutspeicher |
| 320 | zweiter Zuführungsträger | 90 | Wickelgut |
| 321 | zweite Zuführung | 91 | Umlenktrichter |
| 322 | Horizontalschlitten | 92 | Bremsrolle |
| 32 3 | Riemenantrieb | 93 | Sensorrolle |
| 324 | Antrieb | 94 | Kompensationsarm |
| 33 | alternative zweite | 95 | Umlenkrolle |
| | Zuführeinheit | 940 | Federelement |
| 330 | alternativer zweiter | X | erste Richtung |
| | Zuführungsträger | Y | zweite Richtung |
| 331 | alternative zweite Zuführung | Z | dritte Richtung |
| 4 | Spule | | |

## Patentansprüche

1. Wickelmaschine (1), insbesondere Drahtwickelmaschine, für das Wickeln von mindestens einer Spule (4), aufweisend:
einen Maschinenständer (10) mit mindestens einer Spulenkörperaufnahme (2), wobei die mindestens eine Spulenkörperaufnahme (2) einen Aufnahmeraum (5) für mindestens einen zu bewickelnden Spulenkörper (41, 42) bereitstellt und
mindestens eine Wickelgutzuführung (3), wobei die mindestens eine Wickelgutzuführung (3) ausgebildet ist, um Wickelgut (90) in den Aufnahmeraum (5) zuzuführen, **dadurch gekennzeichnet,**
**dass** die mindestens eine Spulenkörperaufnahme (2) einen Satz von mindestens einer ersten Aufnahmeeinheit (21) und mindestens einer zweiten Aufnahmeeinheit (22) umfasst, wobei die Wickelmaschine (1) in einer ersten Einstellung, unter der Verwendung der ersten Aufnahmeeinheit (21), eine Bewicklung des mindestens einen zu bewickelnden Spulenkörpers (41, 42) gemäss einer ersten Wickeltechnik erlaubt und wobei die Wickelmaschine (1) in einer zweiten Einstellung, unter der Verwendung der zweiten Aufnahmeeinheit (22), eine Bewicklung des mindestens einen zu bewickelnden Spulenkörpers (41, 42) gemäss einer zur ersten Wickeltechnik unterschiedlichen zweiten Wickeltechnik erlaubt, wobei die erste und zweite Wickeltechnik ausgewählt sind aus der Gruppe von Wickeltechniken bestehend aus der Spulenwickeltechnik, der konventionellen Nadelwickeltechnik, der Linearwickeltechnik und der Flyerwickeltechnik.

2. Wickelmaschine (1) gemäss Anspruch 1, wobei die erste Aufnahmeeinheit (21) einen ersten Aufnahmeträger (210) und eine am ersten Aufnahmeträger (210) angeordnete erste Aufnahme (211) für die Aufnahme von einem ersten Spulenkörper (41) des mindestens einen zu bewickelnden Spulenkörpers (41, 42) aufweist, womit der erste Spulenkörper (41) gemäss der ersten Wickeltechnik bewickelbar ist und wobei die zweite Aufnahmeeinheit (22) einen zweiten Aufnahmeträger (220) und eine am zweiten Aufnahmeträger (220) angeordnete zweite Aufnahme (221) für die Aufnahme von einem zweiten Spulenkörper (42) des mindestens einen zu bewickelnden Spulenkörpers (41, 42) aufweist, womit der zweite Spulenkörper (42) gemäss der zweiten Wickeltechnik bewickelbar ist.

3. Wickelmaschine (1) gemäss Anspruch 1 oder 2, wobei die mindestens eine Wickelgutzuführung (3) einen Satz von mindestens einer ersten Zuführeinheit (31) und einer zweiten Zuführeinheit (32) aufweist, wobei die Wickelmaschine (1) derart ausgebildet ist, dass in der ersten Einstellung der Wickelmaschine (1), die erste Zuführeinheit (31) die Bewicklung des mindestens einen Spulenkörpers (41, 42) gemäss der ersten Wickeltechnik erlaubt und in der zweiten Einstellung der Wickelmaschine (1), die zweite Zuführeinheit (32) die Bewicklung des mindestens einen Spulenkörpers (41, 42) gemäss der zweiten Wickeltechnik erlaubt.

4. Wickelmaschine (1) gemäss Anspruch 3, wobei die erste Zuführeinheit (31) einen ersten Zuführungsträger (310) und eine am ersten Zuführungsträger (310) angeordnete erste Zuführung (311) für die Zuführung von Wickelgut (90) aufweist, womit der erste Spulenkörper (41) gemäss der ersten Wickeltechnik bewickelbar ist und wobei die zweite Zuführeinheit (32) einen zweiten Zuführträger (320) und eine am zweiten Zuführträger (320) angeordnete zweite Zuführung (321) für die Zuführung von Wickelgut (90) aufweist, womit der zweite Spulenkörper (42) gemäss der zweiten Wickeltechnik bewickelbar ist.

5. Wickelmaschine (1) gemäss einem der vorangehenden Ansprüche, wobei die mindestens eine Spulenkörperaufnahme (2) unlösbar und/oder unverschiebbar und/oder unverschwenkbar und/oder unverdrehbar am Maschinenständer (10) angeordnet ist oder wobei die mindestens eine Spulenkörperaufnahme (2) lösbar und/oder verschiebbar und/oder verschwenkbar und/oder verdrehbar am Maschinenständer (10) angeordnet ist.

6. Wickelmaschine (1) gemäss einem der vorangehenden Ansprüche, wobei der Maschinenständer (10) einen Tischbereich (11) aufweist, wobei der Tischbereich (11) zur Anordnung der mindestens einen Spulenkörperaufnahme (2) ausgebildet ist und wobei der Maschinenständer (10) einen Portalbereich (12) aufweist, wobei der Portalbereich (12) zur Anordnung der mindestens einen Wickelgutzuführung (3) ausgebildet ist.

7. Wickelmaschine (1) gemäss Anspruch 6, wobei der Portalbereich (12) ein Portal (6) aufweist, wobei das Portal (6) unlösbar und/oder unverschiebbar und/oder unverschwenkbar und/oder unverdrehbar bezüglich des Maschinenständers (10) an diesem angeordnet ist und wobei am Portal (6) mindestens ein in einer ersten Richtung (X) bezüglich des Maschinenständers (10) linear verschiebbarer Schlitten (7) angeordnet ist.

8. Wickelmaschine (1) gemäss Anspruch 7, wobei die mindestens eine Spulenkörperaufnahme (2) verschiebbar bezüglich einer zweiten Richtung (Y) bezüglich des Maschinenständers (10) an diesem angeordnet ist, wobei die zweite Richtung (Y) winklig, vorzugsweise rechtwinklig, bezüglich der ersten Richtung (X) ausgebildet ist.

9. Wickelmaschine (1) gemäss einem der vorangehenden Ansprüche, wobei die mindestens eine Wickelgutzuführung (3) unlösbar und/oder unverschiebbar und/oder unvreschwenkbar und/oder unverdrehbar am Maschinenständer (10) angeordnet ist oder wobei die mindestens eine Wickelgutzuführung (3) lösbar und/oder verschiebbar und/oder verschwenkbar und/oder verdrehbar am Maschinenständer (10) angeordnet ist.

10. Wickelmaschine (1) gemäss einem der Ansprüche 7 bis 9, wobei die mindestens eine Wickelgutzuführung (3) am mindestens einen Schlitten (7) angeordnet ist.

11. Wickelmaschine (1) gemäss einem der Ansprüche 8 bis 10, wobei die erste Aufnahme (211) und/oder die zweite Aufnahme (221) derart ausgebildet sind/ist, dass sie eine Drehung des mindestens einen zu bewickelnden Spulenkörpers (41, 42) um eine Achse erlaubt, welche in einer dritten Richtung (Z) bezüglich des Maschinenständers (10) ausgerichtet ist, wobei die dritte Richtung (Z) winklig, vorzugsweise rechtwinklig, bezüglich der ersten Richtung (X) und der zweiten Richtung (Y) ausgebildet ist.

12. Wickelmaschine (1) gemäss einem der vorangehenden Ansprüche, wobei die mindestens eine Spulenkörperaufnahme (2) derart ausgebildet ist, dass gleichzeitig ein, zwei, drei, vier, fünf, sechs, sieben, acht oder mehr zu bewickelnde Spulenkörper (41, 42) aufnehmbar sind.

13. Wickelmaschine (1) gemäss einem der vorangehenden Ansprüche, wobei die mindestens eine Wickelgutzuführung (3) derart ausgebildet ist, dass gleichzeitig ein, zwei, drei, vier, fünf, sechs, sieben, acht, neun, zehn, elf, zwölf oder mehr zu bewickelnde Spulenkörper (41, 42) bewickelbar sind.

14. Wickelmaschine (1) gemäss einem der Ansprüche 11 bis 13, wobei die erste Zuführung (311) in der ersten Richtung (X) verschiebbar ist und bezüglich der dritten Richtung (Z) verschwenkbar oder verdrehbar ist und wobei die erste Aufnahme (211) bezüglich der zweiten Richtung (Y) verschiebbar ist und bezüglich der dritten Richtung (Z) verschwenkbar oder verdrehbar ist.

15. Wickelmaschine (1) gemäss einem der Ansprüche 11 bis 13, wobei die zweite Zuführung (321) in der ersten Richtung (X) verschiebbar ist oder wobei die zweite Zuführung (321) in der ersten Richtung (X) verschiebbar und bezüglich der dritten Richtung (Z) verschwenkbar oder verdrehbar ist und wobei die zweite Aufnahme (221) bezüglich der zweiten Richtung (Y) verschiebbar ist.

## Claims

1. A winding machine (1), in particular a wire-winding machine, for winding at least one coil (4), comprising:
a machine stand (10) having at least one coil-former receptacle (2), wherein the at least one coil-former receptacle (2) provides a receiving space (5) for at least one coil former (41, 42) to be wound, and
at least one winding-material feed (3), wherein the at least one winding-material feed (3) is designed to feed winding material (90) into the receiving space (5), **characterized in that**
the at least one coil-former receptacle (2) comprises a set of at least one first receiving unit (21) and at least one second receiving unit (22), wherein, in a first setting, using the first receiving unit (21), the winding machine (1) allows winding of the at least one coil former (41, 42) to be wound in accordance with a first winding technique, and wherein, in a second setting, using the second receiving unit (22), the winding machine (1) allows winding of the at least one coil former (41, 42) to be wound in accordance with a second winding technique, which is different from the first winding technique, wherein the first and second winding technique are selected from the group of winding techniques comprising the coil winding technique, the conventional needle winding technique, the linear winding technique and the flyer winding technique.

2. The winding machine (1) as claimed in claim 1, wherein the first receiving unit (21) has a first receiving carrier (210) and a first receptacle (211) arranged on the first receiving carrier (210) for receiving a first coil former (41) of the at least one coil former (41, 42) to be wound, whereby the first coil former (41) can be wound in accordance with the first winding technique and wherein the second receiving unit (22) has a second receiving carrier (220) and a second receptacle (221) arranged on the second receiving carrier (220) for receiving a second coil former (42) of the at least one coil former (41, 42) to be wound, whereby the second coil former (42) can be wound in accordance with the second winding technique.

3. The winding machine (1) as claimed in claim 1 or 2, wherein the at least one winding-material feed (3) has a set of at least one first feed unit (31) and a second feed unit (32), wherein the winding machine (1) is designed in such a way that, in the first setting of the winding machine (1), the first feed unit (31) allows the winding of the at least one coil former (41, 42) in accordance with the first winding technique and, in the second setting of the winding machine (1), the second feed unit (32) allows the winding of the at least one coil former (41, 42) in accordance with the second winding technique.

4. The winding machine (1) as claimed in claim 3, wherein the first feed unit (31) has a first feed carrier (310) and a first feed (311) arranged on the first feed carrier (310) for feeding winding material (90), whereby the first coil former (41) can be wound in accordance with the first winding technique and wherein the second feed unit (32) has a second feed carrier (320) and a second feed (321) arranged on the second feed carrier (320) for feeding winding material (90), whereby the second coil former (42) can be wound in accordance with the second winding technique.

5. The winding machine (1) as claimed in one of the preceding claims, wherein the at least one coil-former receptacle (2) is non-releasably and/or non-displaceably and/or non-swivelably and/or non-rotatably arranged on the machine stand (10) or wherein the at least one coil-former receptacle (2) is releasably and/or displaceably and/or swivelably and/or rotatably arranged on the machine stand (10).

6. The winding machine (1) as claimed in one of the preceding claims, wherein the machine stand (10) has a table area (11), wherein the table area (11) is designed for arranging the at least one coil-former receptacle (2) and wherein the machine stand (10) has a gantry area (12), wherein the gantry area (12) is designed for arranging the at least one winding-material feed (3).

7. The winding machine (1) as claimed in claim 6, wherein the gantry area (12) has a gantry (6), wherein the gantry (6) is arranged on the machine stand (10) such that it is non-releasable and/or non-displaceable and/or non-swivelable and/or non-rotatable relative thereto, and wherein at least one slide (7) is arranged on the gantry (6) such that it is linearly displaceable in a first direction (X) relative to the machine stand (10).

8. The winding machine (1) as claimed in claim 7, wherein the at least one coil-former receptacle (2) is arranged on the machine stand (10) such that it is displaceable relative to a second direction (Y) relative to the said machine stand, wherein the second direction (Y) is formed at an angle, preferably a right angle, relative to the first direction (X).

9. The winding machine (1) as claimed in one of the preceding claims, wherein the at least one winding-material feed (3) is non-releasably and/or non-displaceably and/or non-swivelably and/or non-rotatably arranged on the machine stand (10) or wherein the at least one winding-material feed (3) is releasably and/or displaceably and/or swivelably and/or rotatably arranged on the machine stand (10).

10. The winding machine (1) as claimed in one of claims 7 to 9, wherein the at least one winding-material feed (3) is arranged on at least one slide (7).

11. The winding machine (1) as claimed in one of claims 8 to 10, wherein the first receptacle (211) and/or the second receptacle (221) are/is designed in such a way that it allows a rotation of the at least one coil former (41, 42) to be wound about an axis which is aligned in a third direction (Z) relative to the machine stand (10), wherein the third direction (Z) is formed at an angle, preferably a right angle, relative to the first direction (X) and the second direction (Y).

12. The winding machine (1) as claimed in one of the preceding claims, wherein the at least one coil-former receptacle (2) is designed in such a way that one, two, three, four, five, six, seven, eight or more coil formers (41, 42) to be wound can be received at the same time.

13. The winding machine (1) as claimed in one of the preceding claims, wherein the at least one winding-material feed (3) is designed in such a way that one, two, three, four, five, six, seven, eight, nine, ten, eleven, twelve or more coil formers (41, 42) to be wound can be wound at the same time.

14. The winding machine (1) as claimed in one of claims 11 to 13, wherein the first feed (311) is displaceable in the first direction (X) and is swivelable or rotatable relative to the third direction (Z) and wherein the first receptacle (211) is displaceable relative to the second direction (Y) and is swivelable or rotatable relative to the third direction (Z).

15. The winding machine (1) as claimed in one of claims 11 to 13, wherein the second feed (321) is displaceable in the first direction (X) or wherein the second feed (321) is displaceable in the first direction (X) and swivelable or rotatable relative to the third direction (Z) and wherein the second receptacle (221) is displaceable relative to the second direction (Y).

## Revendications

1. Bobineuse (1), en particulier bobineuse de fil, pour enrouler au moins une bobine (4), comprenant:
un bâti de machine (10) avec au moins un porte-bobine (2), le au moins un porte-bobine (2) fournissant un espace de réception (5) pour au moins une bobine (41, 42) à bobiner, et
au moins une alimentation en matériau d'enroulement (3), l'au moins une alimentation en matériau d'enroulement (3) étant conçue pour amener le matériau d'enroulement (90) dans l'espace de réception (5), **caractérisé en ce que**
l'au moins un porte-bobine (2) comprend un ensemble d'au moins une première unité de réception (21) et d'au moins une deuxième unité de réception (22), la bobineuse (1) permettant d'enrouler la au moins une bobine (41, 42) dans un premier réglage, en utilisant la première unité de réception (21), selon une première technique de bobinage, et la bobineuse (1) permettant d'enrouler la au moins une bobine (41, 42) dans un deuxième réglage, en utilisant la deuxième unité de réception (22), selon une deuxième technique d'enroulement différente de la première technique d'enroulement, les première et deuxième techniques d'enroulement étant choisies dans le groupe des techniques d'enroulement constitué par la technique d'enroulement de bobine, la technique classique d'enroulement par aiguille, la technique d'enroulement linéaire et la technique de l'envol.

2. Bobineuse (1) selon la revendication 1, dans laquelle la première unité de réception (21) comprend un premier support de réception (210) et un premier moyen de réception (211) disposé sur le premier support de réception (210) pour recevoir une première bobine (41) de la au moins une bobine (41, 42) devant être enroulée, avec laquelle la première bobine (41) peut être enroulée selon la première technique d'enroulement et la deuxième unité de réception (22) comportant un deuxième support de réception (220) et un deuxième moyen de réception (221) disposé sur le deuxième support de réception (220) pour recevoir une deuxième bobine (42) de la au moins une bobine (41, 42) devant être enroulée, avec laquelle la deuxième bobine (42) peut être enroulée selon la deuxième technique d'enroulement.

3. Bobineuse (1) selon la revendication 1 ou 2, dans laquelle la au moins une alimentation en matériau d'enroulement (3) présente un ensemble d'au moins une première unité d'alimentation (31) et une deuxième unité d'alimentation (32), dans laquelle la bobineuse (1) est conçue de telle sorte que lors du premier réglage de la bobineuse (1), la première unité d'alimentation (31) permet d'enrouler la au moins une bobine (41, 42) selon la première technique d'enroulement et, dans le deuxième réglage de la bobineuse (1), la deuxième unité d'alimentation (32) permet d'enrouler la au moins une bobine (41, 42) selon la deuxième technique d'enroulement.

4. Bobineuse (1) selon la revendication 3, dans laquelle la première unité d'alimentation (31) présente un premier support d'alimentation (310) et une première alimentation (311) disposée sur le premier support d'alimentation (310) pour l'alimentation en matériau d'enroulement (90), avec lequel la première bobine (41) peut être enroulée selon la première technique d'enroulement, et la deuxième unité d'alimentation (32) comportant un deuxième support d'alimentation (320) et une deuxième alimentation (321), disposée sur le deuxième support d'alimentation (320), pour l'alimentation en matériau d'enroulement (90), avec lequel la deuxième bobine (42) peut être enroulée selon la deuxième technique d'enroulement.

5. Bobineuse (1) selon l'une des revendications précédentes, dans laquelle le au moins un porte-bobine (2) est disposé sur le bâti de machine (10) de manière indémontable et/ou non déplaçable et/ou non pivotante et/ou non rotative, ou dans laquelle le au moins un porte-bobine (2) est disposé de manière amovible et/ou mobile et/ou pivotante et/ou rotative sur le bâti de machine (10).

6. Bobineuse (1) selon l'une quelconque des revendications précédentes, dans laquelle le bâti de machine (10) présente une zone de table (11), dans laquelle la zone de table (11) est conçue pour la disposition d'au moins un porte-bobine (2) et dans laquelle le bâti de machine (10) présente une zone de portail (12), la zone de portail (12) étant conçue pour la disposition de la au moins une alimentation en matériau d'enroulement (3).

7. Bobineuse (1) selon la revendication 6, dans laquelle la zone de portail (12) présente un portail (6), dans laquelle le portail (6) est disposé sur le bâti de machine (10) de manière à être non détachable et/ou non déplaçable et/ou non pivotant et/ou non rotatif par rapport au bâti de machine (10) et dans laquelle au moins un chariot (7) est disposé sur le portail (6), lequel chariot (7) peut être déplacé linéairement dans une première direction (X) par rapport au bâti de machine (10).

8. Bobineuse (1) selon la revendication 7, dans laquelle le au moins un porte-bobine (2) est disposé sur le bâti de machine (10) de manière à pouvoir être déplacé par rapport à une deuxième direction (Y) par rapport au bâti de machine (10), la deuxième direction (Y) étant formée selon un angle, de préférence perpendiculaire à la première direction (X).

9. Bobineuse (1) selon l'une des revendications précédentes, dans laquelle l'au moins une alimentation en matériau d'enroulement (3) est disposée de manière indémontable et/ou non déplaçable et/ou non pivotante et/ou non rotative sur le bâti de machine (10) ou dans laquelle la au moins une alimentation en matériau d'enroulement (3) est disposée de manière amovible et/ou mobile et/ou pivotante et/ou rotative sur le bâti de machine (10).

10. Bobineuse (1) selon l'une quelconque des revendications 7 à 9, dans laquelle l'au moins une alimentation en matériau d'enroulement (3) est disposée sur le au moins un chariot (7).

11. Bobineuse (1) selon l'une quelconque des revendications 8 à 10, dans laquelle le premier moyen de réception (211) et/ou le deuxième moyen de réception (221) sont conçus de manière à permettre la rotation de la au moins une bobine (41, 42) à enrouler autour d'un axe qui est aligné dans une troisième direction (Z) par rapport au bâti de machine (10), la troisième direction (Z) étant formée angulairement, de préférence à angles droits, par rapport aux première direction (X) et deuxième direction (Y).

12. Bobineuse (1) selon l'une quelconque des revendications précédentes, dans laquelle le au moins un porte-bobine (2) est conçu de telle sorte qu'une, deux, trois, quatre, cinq, six, sept, huit bobines ou plus (41, 42) à enrouler puissent être reçues simultanément.

13. Bobineuse (1) selon l'une quelconque des revendications précédentes, dans laquelle l'au moins une alimentation en matériau d'enroulement (3) est conçue de telle sorte qu'une, deux, trois, quatre, cinq, six, sept, huit, neuf, dix, onze, douze ou plus bobines (41, 42) à enrouler puissent être enroulées simultanément.

14. Bobineuse (1) selon l'une quelconque des revendications 11 à 13, dans laquelle la première alimentation (311) peut être déplacée dans la première direction (X) et peut pivoter ou tourner par rapport à la troisième direction (Z) et dans laquelle le premier moyen de réception (211) peut être déplacé par rapport à la deuxième direction (Y) et peut être pivoté ou tourné par rapport à la troisième direction (Z).

15. Bobineuse (1) selon l'une quelconque des revendications 11 à 13, dans laquelle la deuxième alimentation (321) peut être déplacée dans la première direction (X) ou dans laquelle la deuxième alimentation (321) peut être déplacée dans la première direction (X) et peut pivoter ou tourner par rapport à la troisième direction (Z) et dans laquelle la deuxième réception (221) peut être déplacé par rapport à la deuxième direction (Y).
